# EUROPEAN PATENT SPECIFICATION

(11) **EP 2 169 242 B1**
(45) Date of publication and mention of the grant of the patent: **15.05.2019**
(21) Application number: 09171294.3
(22) Date of filing: 25.09.2009
(51) Int. Cl.: F16C 29/02, F16C 33/10, F04B 5/02, F04B 27/02, F04B 27/04, F04B 27/08, F04B 39/00, F04B 39/02, F04B 53/14, F16C 5/00

(54) **Crank mechanism for a reciprocating compressor**
Koppelgetriebe für einen Kolbenverdichter
Mécanisme articulé pour un compresseur alternatif

(30) Priority: 29.09.2008 IT MI20081723
(43) Date of publication of application: 31.03.2010
(73) Proprietor: Nuovo Pignone S.p.A., 50127 Florence (IT)
(72) Inventor: Campo, Nicola, Matteucci 2 (IT); Maggi, Carmelo, Matteucci 2 (IT); Graziani, Franco, deceased (IT)
(74) Representative: Illingworth-Law, William Illingworth

(56) References cited:
- EP-A- 0 318 182
- WO-A-95/08066
- DE-A1-102006 059 600
- DE-C1- 10 222 313
- US-A- 2 110 104
- US-A1- 2006 180 018

## Description

The present invention in general refers to fluido-dynamic operating machines and, more in particular but not exclusively to, members of a crank mechanism present inside a double acting reciprocating compressor.

EP0318182 discloses a crank mechanism for a compressor, said crank mechanism comprises the features of the crank mechanism of the preamble of claim 1.

DE 102 22 313 discloses an engine with a piston displaced within a corresponding engine cylinder and coupled via a piston rod to a cross-head provided with opposing pairs of identical sliding shoes displaced along slide rails. The sliding surface of each slide rail is matched along its surface to the expected contact force between the sliding shoe and the slide rail.

FR 642 566 discloses two runners. One runner is illustrated having lubrication grooves as well as grooves for collecting oil.

As it is known, a compressor is a machine which is able to raise the pressure of a compressible fluid (gas) through the use of mechanical energy. In reciprocating compressors, the compression of the fluid is carried out by one or more reciprocating pistons inside a respective cylinder. The fluid to be compressed is aspirated into the cylinder through one or more intake ducts, whereas the compressed fluid is discharged from the cylinder towards one or more discharge ducts. The piston or the pistons of a reciprocating compressor are commonly actuated by electric motors or by internal combustion engines, through a driving shaft for transmitting motion and a conventional connecting rod-crank mechanism.

In double acting reciprocating compressors each piston does not perform any "idle" strokes, in that it compresses gas in both its movement directions. For this exact reason, the piston itself cannot be directly connected to the connecting rod of the connecting rod-crank mechanism, since the closed type cylinder would not allow the connecting rod to oscillate. A so called "cross head" mechanism is thus positioned between the piston and the connecting rod. The piston is connected to a rod, which can only move in a rectilinear manner, and the rod is connected to the cross head. Therefore, the stem does not oscillate whereas the connecting rod, connected to the other side of the cross head, is able to oscillate freely. With the shoes it is provided with, the cross head, is able to slide along suitable fixed tracks, called "counter-shoes", which allow it to move in the same direction as the stroke of the piston. Since the outer surfaces of the shoes of the cross head move with respect to the inner surfaces of the relative tracks, it is necessary to introduce lubricating oil to prevent them from coming into contact with one another. The lubricating system is of the forced type and, since it mainly provides the cross head with a hydrostatic type support, it prevents the moving parts involved from wearing.

During the reciprocating movement of the cross head, particular operating conditions can occur, for example, when the piston moves at a slow speed, where the cross head itself is not able to supply a sufficient amount of lubricating oil. In such a situation the layer of lubricating oil becomes extremely thin and there can be losses due to friction, with consequent heat production and increase of the temperature of the lubricating oil itself thus reducing its viscosity, further decreasing its lubricating properties. In the worst situations, the surfaces can also come into contact with each other, consequently possibly damaging the hydraulic machine.

The purpose of the present invention is therefore that of making a crank mechanism for a reciprocating compressor, in particular but not exclusively for the double acting type, which allows an efficient and even lubrication of the surfaces of the cross head and of the relative sliding tracks to be obtained, even in the most critical operation conditions for the compressor.

Another purpose of the invention is that of making a crank mechanism for a reciprocating compressor which is able to reduce to the minimum the possibility of the components of the machine being damaged due to inadequate lubrication.

Yet another purpose of the invention is finally that of making a crank mechanism for a reciprocating compressor in which it is possible to adjust the pressure of the lubricating oil according to the operation conditions of the compressor.

These purposes according to the present invention are obtained by making a crank mechanism for a reciprocating compressor as outlined in claim 1.

Further characteristics of the invention are highlighted in the dependent claims, which are an integral part of the present description.

The characteristics and the advantages of a crank mechanism for a reciprocating compressor, mainly but not exclusively for the double acting type, according to the present invention shall become clearer from the following description, given as an example and not for limiting purposes, referring to the attached schematic drawings in which:
figure 1a is a schematic top side view which shows the main components of a double acting type reciprocating compressor;
figure 1b is a schematic top side view which shows the main components of a reciprocating compressor provided with two opposite single acting type cylinders;
figure 2 is a diagram which shows the progression, over a full cycle, of the axial components of the forces generated by the gas pressure (inside the cylinder of a reciprocating compressor) and of the axial inertia forces of the moving parts;
figure 3 is a diagram which shows the progression of the normal components (to the direction of motion) of the forces generated by the gas pressure inside the cylinder of a reciprocating compressor;
figure 4 is a perspective view which shows the main components of the crank mechanism of a generic reciprocating compressor;
figures 5a and 5b, show the components of the crank mechanism of a reciprocating compressor made according to the prior art, in a view from the top and a view from the bottom, respectively;
figures 6a and 6b show the components of the crank mechanism of a reciprocating compressor according to a first embodiment of the present invention, in a view from the top and a view from the bottom, respectively;
figures 7a and 7b show the components of the crank mechanism of a reciprocating compressor according to a second embodiment of the present invention, in a view from the top and a view from the bottom, respectively;
figures 8a and 8b show the components of the crank mechanism of a reciprocating compressor according to a third embodiment of the present invention, in a view from the top and a view from the bottom, respectively;
figure 9 shows a layout of a system for the circulation of lubricating oil in a reciprocating compressor provided with a crank mechanism made according to the present invention.

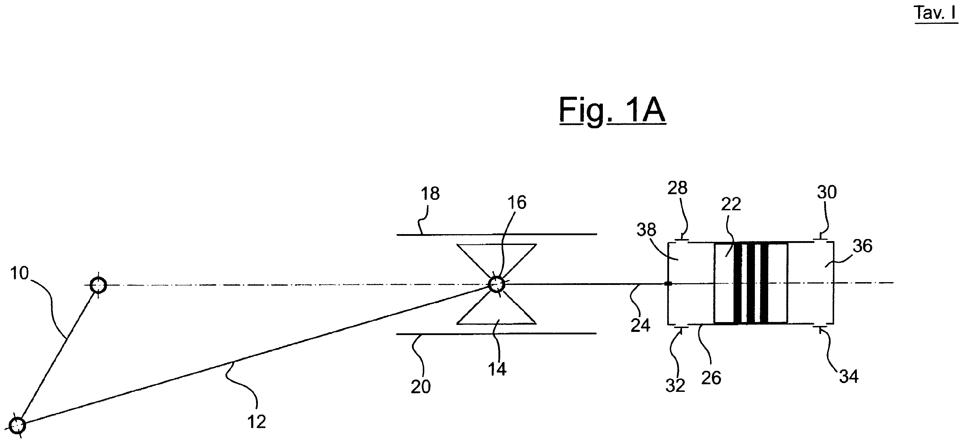

With reference, in particular, to figure 1a, the essential elements present inside a generic double acting type reciprocating compressor are schematically shown.

The compressor comprises a shaft with at least one crank 10 connected to a connecting rod 12, which transfers the rotary motion of the shaft, actuated by a generic electric or thermal engine (not shown), to a cross head 14 through a jack 16. The cross head has the task of converting the rotary motion into reciprocating motion, being forced to move inside suitable opposite tracks 18 and 20 which allow it to move in the same direction as the stroke of the piston 22. A rod 24 connects the cross head 14 to the piston 22. The piston, moving inside the cylinder 26, is thus able to compress the gas.

The gas to be compressed, at a determined aspiration pressure, is introduced inside the cylinder through one or more aspiration valves 28 and 30 and is then compressed by a piston until it reaches a desired final pressure value. Once the gas has reached such a final pressure value, it is discharged from the cylinder through one or more discharge valves 32 and 34. In a double acting type cylinder, like the one schematically shown in figure 1a, the compression occurs inside two distinct chambers, that is to say, the chamber 36 facing towards the cylinder-head 26 and the chamber 38 facing towards the cross head 14.

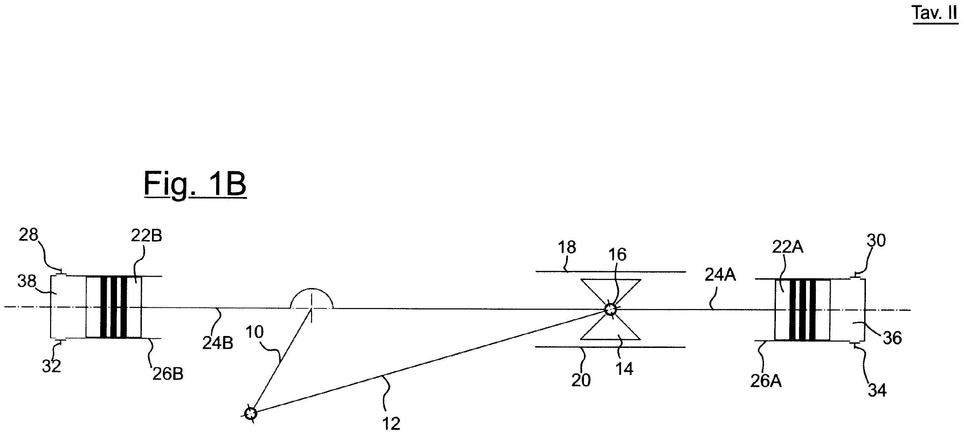

Referring now to figure 1b, the essential elements present inside a generic reciprocating compressor, provided with two single-acting type cylinders opposite one another, are schematically shown. Each cylinder 26A, 26B is provided with a relative piston 22A, 22B which is connected, through the respective rod 24A, 24B, to the cross head 14. Each cylinder 26A, 26B is also equipped with a respective chamber 36, 38 in which the gas is compressed in a totally analogous way as that outlined with reference to the double acting type compressor.

Moreover, in this second type of compressor illustrated in figure 1b, the connecting rod 12 - crank 10 mechanism and the cross head 14, are substantially made in the same way as those of the double acting compressor previously illustrated with reference to figure 1a. It should therefore be clear, that a crank mechanism like the one made according to the present invention can be applied without distinction to both types of compressor outlined above.

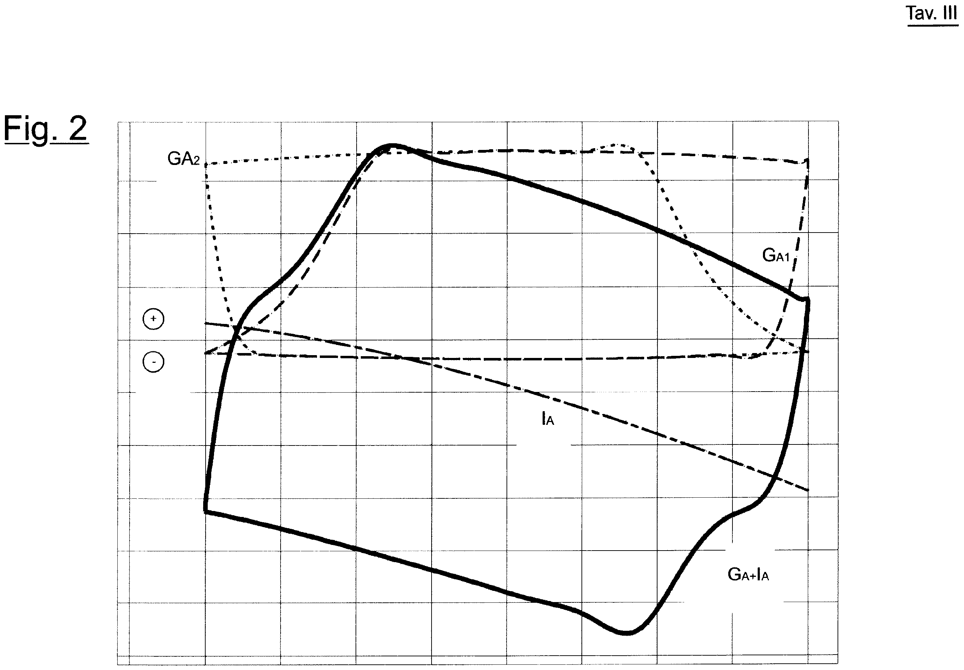

Therefore, irrespective of the type of reciprocating compressor, the pressure of the gas inside the compression chambers 36 and 38 generates an axial force, that is to say parallel to the movement direction of the piston 22, at each end of the cylinder 26 and at the respective corresponding surfaces of the piston which define the two chambers 36 and 38. In figure 2, "G_{A1}" indicates the progression of the axial component of the force generated inside the chamber 36 facing towards the head, whereas "G_{A2}" indicates the progression of the axial component of the force generated inside the opposite chamber 38. The overall axial force G_{A} = (G_{A1} + G_{A2}) induced by the gas, combined with the force of inertia I_{A} of the masses of the reciprocating elements, determines the overall axial resistant load G_{A} + I_{A} transferred from the cross head 14 to the connecting rod 12.

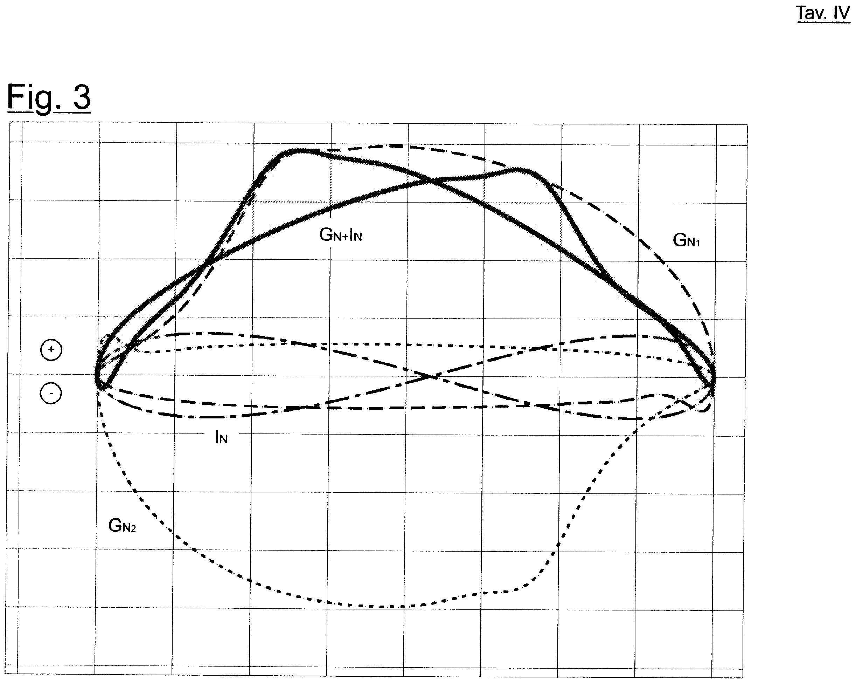

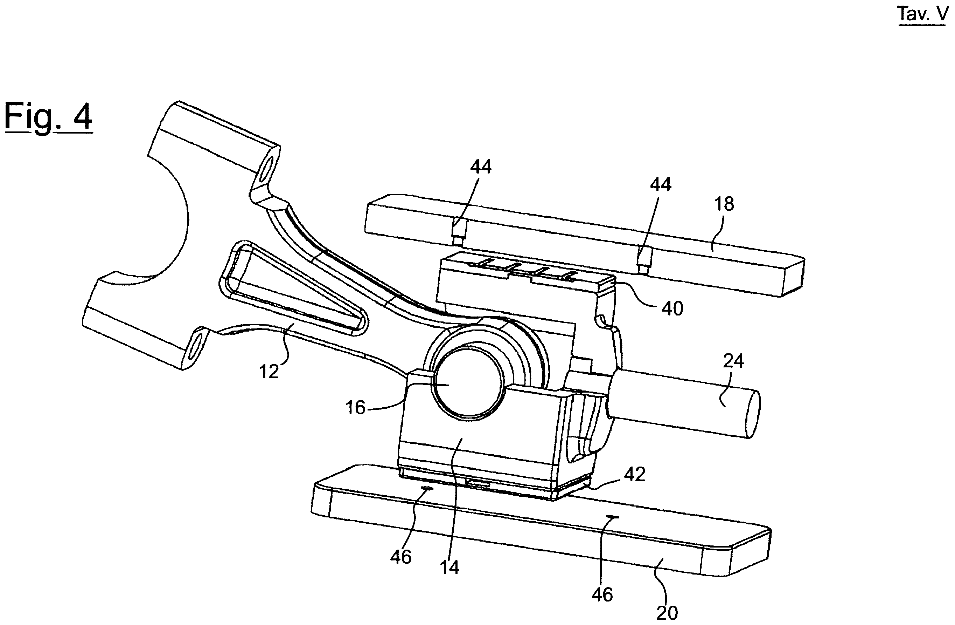

Similarly, figure 3 illustrates the normal components (indicated with G_{N1}, G_{N2} and I_{N}, respectively), that is to say which are perpendicular to the movement direction of the piston 22, that the connecting rod, in its rotating-translating movement, transfers to the cross head (through the jack) to dynamically balance the forces G_{A} generated inside the chambers 36 and 38 of the cylinder 26 and the forces of inertia I_{A}. The overall normal load G_{N} + I_{N} therefore bears down upon the opposite sliding shoes 40 and 42 of the cross head 14 (figure 4), which face each other on the tracks 18 and 20, respectively.

In the case in which the force of inertia I_{A} is significantly lower than the overall force G_{A} generated by the gas, for example, when the angular velocities of the shaft are significantly low, the vector of the normal component G_{N} + I_{N} of the load has a dominant modulus during the operation cycle of the compressor, thus determining a negligible or null load inversion. By "load inversion" we mean the transition from a compression load to a traction load at the jack 16 of the cross head 14. Such a phenomenon allows the lubricating oil to flow regularly between the sliding shoes 40 and 42 and the respective tracks 18 and 20.

According to what has been outlined above, one of the two sliding shoes 40 and 42 of the cross head 14 is usually subject to a greater normal load than the other one during the operation cycle of the compressor. Such an unbalanced load condition between the shoes causes a decrease in the maximum bearable normal load (due to the limit of the shoe subject to the heaviest condition) and, consequently, also in the overall maximum axial load G_{A} + I_{A}, i.e., of the performance of the compressor.

When the surfaces of the shoes 40 and 42 slide rapidly with respect to the tracks 18 and 20, the lubricating oil, supplied through suitable inlet holes 44, 46 made on the walls 18 and 20 themselves, covers all the contact surfaces filling all the spaces in between them. Only once the surfaces of the moving components are completely separated by an even layer of lubricant can there indeed be a correct lubrication from a hydrodynamic and hydrostatic point of view, avoiding metal contact between the surfaces themselves.

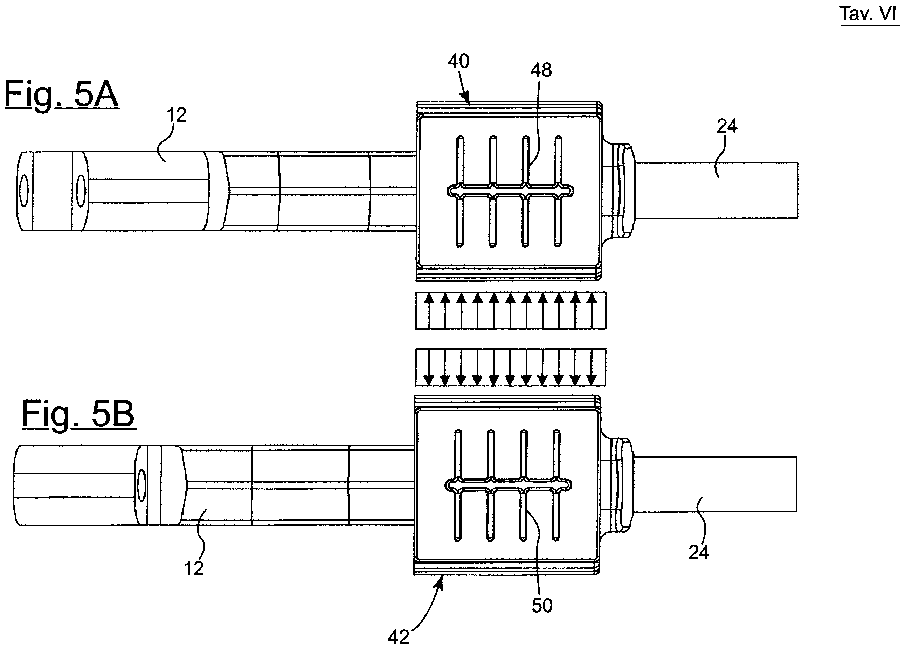

When, on the other hand, during the reciprocating motion of the cross head 14 there are low speed and/or high normal load operation conditions, the sliding shoes 40 and 42 do not distribute enough oil through the respective surface grooves 48 and 50 they are provided with (figures 5a and 5b), to form a thick enough lubricant layer for the crank mechanism to operate correctly. In such operation conditions the friction increases between the components, with consequent heat generation which causes the temperature of the lubricating oil to increase.

This causes a reduction of the oil viscosity and therefore also of the capacity of the oil itself to distribute itself as evenly as possible on the contact surfaces. In the most critical conditions, the surfaces can even seize up.

Therefore, according to the invention, in contrast with what happens in the symmetric configuration according to the prior art, shown in figures 5a and 5b, one of the two sliding shoes 40 of the cross head 14 is equipped with a surface for making contact with the tracks 18 and 20 which has a different shape and/or size than the contact surface of the opposite sliding shoe 42.

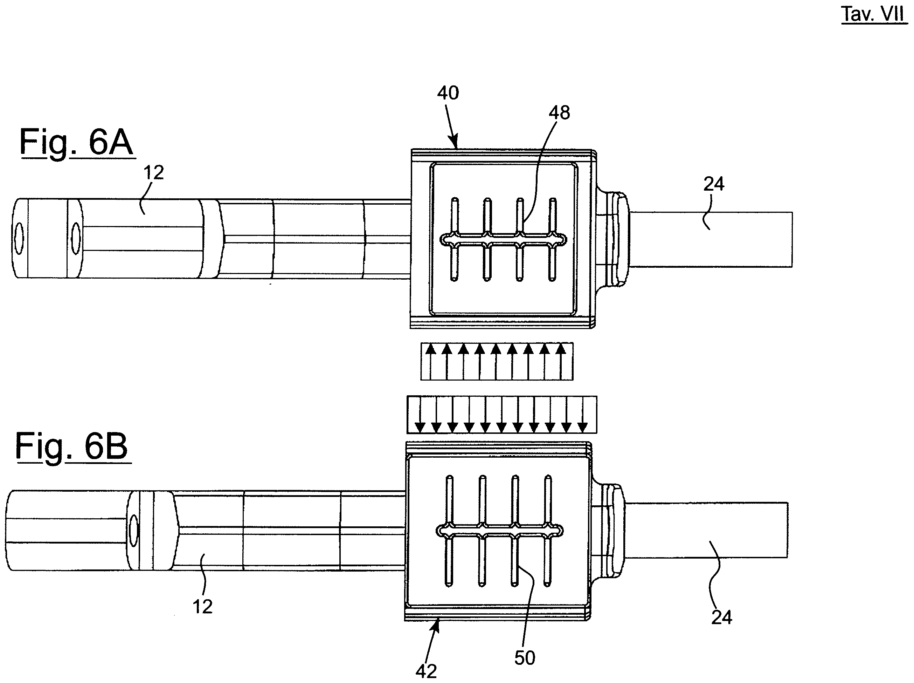

More precisely, according to the embodiment shown in figures 6a and 6b, the two sliding shoes 40 and 42 each have a contact surface with a different area from each other, with an equal number of respective surface grooves 48 and 50 for distributing oil and having identical arrangement along the surface of each shoe 40 and 42.

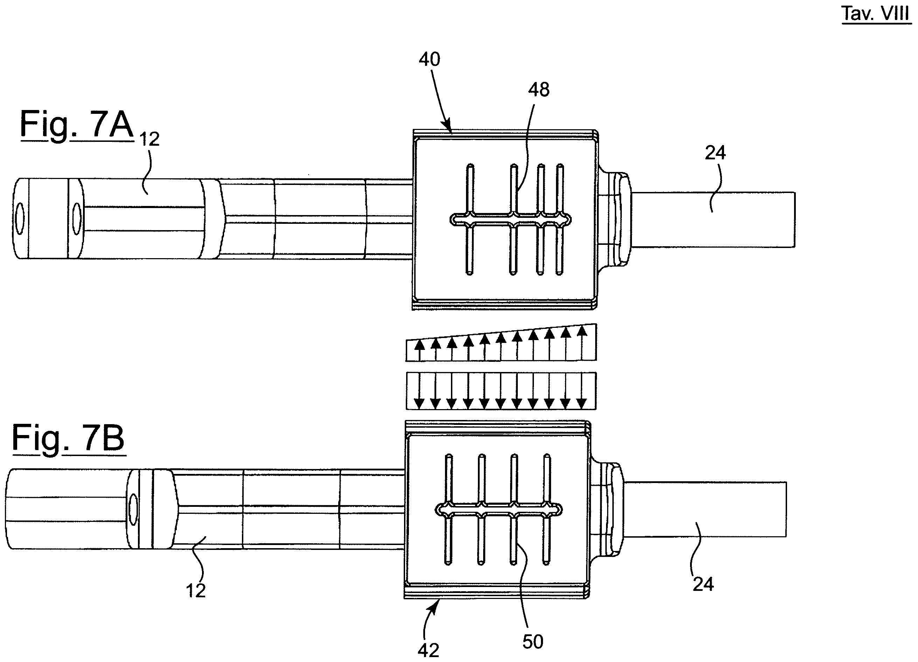

Alternatively, according to the embodiment shown in figures 7a and 7b, the two sliding shoes 40 and 42 each have a surface with the same area, with an equal number of respective surface grooves 48 and 50 for distributing oil but with a different arrangement along the surface of each shoe 40 and 42.

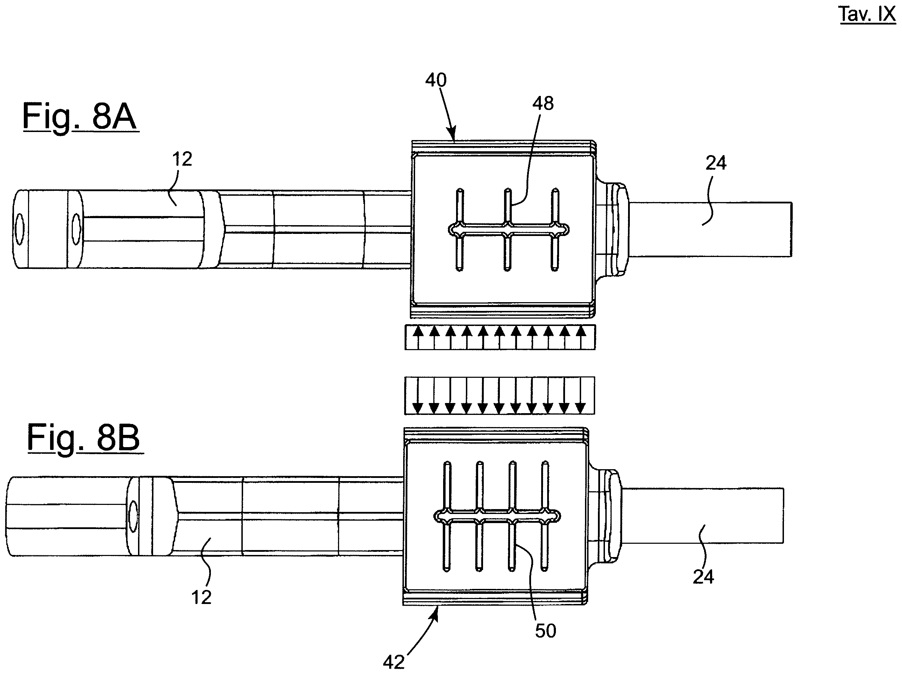

As a further alternative, with reference to the embodiment shown in figures 8a and 8b, the two sliding shoes 40 and 42 can each have a surface having the same area, with a different number of respective surface grooves 48 and 50 for distributing oil along the surface of each shoe 40 and 42.

The differences in shape and/or size between the upper sliding shoe 40 and the lower one 42 of the cross head 14 lead to the generation of different hydrostatic and hydrodynamic support loads of the pressurized oil on the respective surfaces of the shoes 40 and 42 themselves, as shown in the force diagrams of figures 6a to 8b, so as to be able to balance the outer load variations which bear upon the crank mechanism of the compressor.

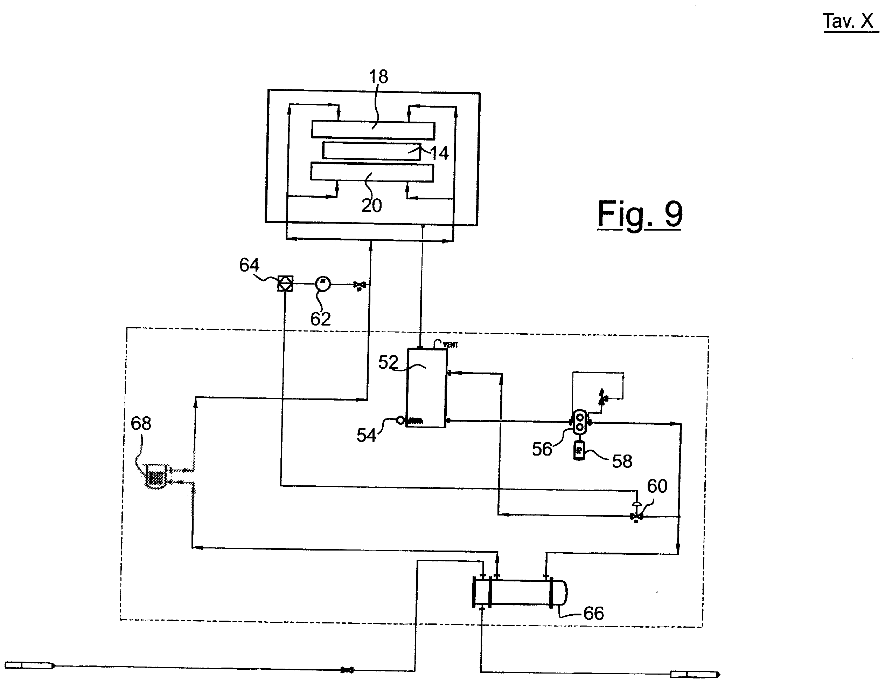

Finally, figure 9 shows a system which is able to send the lubricating oil through the inlet holes 44, 46 made on the tracks 18 and 20 of the cross head 14. As previously described, the oil forms a layer of lubricant which supports the sliding shoes 40 and 42 when they are subject to the normal component G_{N} + I_{N} of the overall forces generated both by the pressure of the gas inside the cylinder 26 as well as by the force of inertia of the parts in reciprocating motion.

The lubricating system comprises at least one oil tank 52, provided with a heating device 54 which keeps the temperature of the oil itself within a range of optimal temperatures so as to obtain a correct lubrication of the compressor. Downstream of the container 52 an oil discharge pump 56 is foreseen (provided with a relative safety valve), controlled by an electric motor 58 and which is able to increase the pressure of the oil itself.

The maximum oil pressure value is adjusted and limited through a valve 60 for controlling the pressure (so called FC or "fail closed" valve). The operation of the valve 60 is managed through a pressure transmitter 62 and a device for controlling the pressure 64, so as to adjust the pressure of the lubricating oil according to the magnitude of the normal loads which act upon the crank mechanism of the compressor.

The amount of excess oil, limited by the valve 60, is reintroduced into the container 52, whereas the oil for lubricating passes through a water cooler 66. After it has been cooled down, the oil is sent to a filter 68 so that possible impurities are removed before entering into the gaps between the sliding shoes 40 and 42 and the respective tracks 18 and 20, through the holes 44 and 46. The oil flows continuously through said gaps and the oil going out is recovered and sent back to the container 52, through a suitable return duct.

It has thus been seen that the crank mechanism for a reciprocating compressor, mainly but not exclusively of the double acting type, according to the present invention obtains the purposes previously highlighted. In particular, the specific geometry of the shoes of the cross head and of the relative support members, as well as the possibility of adjusting the pressure of the lubricating oil let into the compressor, allow critical lubricating conditions to be avoided. Numeric calculations obtained with suitable dynamic fluid calculation software have demonstrated that a suitable choice of the size and form characteristics of the aforementioned sliding shoes of the cross head ensures that the lubricating oil layer is thick enough for a wide range of operation conditions of the machine.

The crank mechanism for a reciprocating compressor according to the present invention thus conceived can in any case undergo numerous modifications and variants, all covered by the same inventive concept; moreover, all the details can be replaced by technically equivalent elements. In practice the materials used, as well as the shapes and sizes, can be any according to the technical requirements.

The scope of protection of the invention is thus defined by the attached claims.

## Claims

1. A reciprocating compressor comprising a crank mechanism, said crank mechanism being of the type suitable for fixedly connecting to a rod (24, 24A, 24B) of a piston (22, 22A, 22B) of the compressor and to a crank shaft (10), said crank mechanism comprising at least one cross head (14) arranged to be operatively connected to said crank shaft (10) through a connecting rod (12) and to said rod (24, 24A, 24B) and to reciprocate inside at least two opposite tracks (18, 20), said cross head (14) being further provided with at least two opposite sliding shoes (40, 42) arranged to respectively face onto said tracks (18, 20), **characterized in that** one (40) of said sliding shoes is equipped with a surface for making contact with said tracks (18, 20) having a different oil distribution arrangement shape and/or size with respect to the contact surface of the opposite sliding shoe (42), wherein the tracks (18, 20) have lubricating oil inlet holes (44, 46) to cover lubricating oil over all of the contact surfaces filling all the spaces between the tracks (18, 20) and the sliding shoes (40, 42).

2. The reciprocating compressor according to claim 1, **characterized in that** each contact surface of said opposite sliding shoes (40, 42) is provided with one or more surface grooves (48, 50) suitable for distributing a lubricating fluid between said opposite sliding shoes (40, 42) and said tracks (18, 20).

3. The reciprocating compressor according to claim 2, **characterized in that** each of said opposite sliding shoes (40, 42) has a contact surface which has different areas with respect to one another, with an equal number of respective surface grooves (48, 50) and having the same arrangement along the contact surface of each of said opposite sliding shoes(40, 42).

4. The reciprocating compressor according to claim 2, **characterized in that** said opposite sliding shoes (40, 42) each have a contact surface with the same area, with an equal number of respective surface grooves (48, 50) and having a different arrangement along the contact surface of each of said opposite sliding shoes (40, 42).

5. The reciprocating compressor according to claim 2, **characterized in that** said opposite sliding shoes (40, 42) each have a contact surface with the same area, with a different number of respective surface grooves (48, 50) along the contact surface of each of said opposite sliding shoes (40, 42).

6. The reciprocating compressor according to any preceding claim, provided with at least one double acting type cylinder (26).

7. The reciprocating compressor according to any preceding claim, provided with at least two single acting type cylinders (26A, 26B), opposite one another.

## Patentansprüche

1. Kolbenverdichter umfassend ein Koppelgetriebe, wobei das Koppelgetriebe von der Art ist, die zum festen Verbinden mit einer Stange (24, 24A, 24B) eines Kolbens (22, 22A, 22B) des Verdichters und mit einer Kurbelwelle (10) geeignet ist, wobei das Koppelgetriebe mindestens einen Kreuzkopf (14) umfasst, der derart angeordnet ist, dass er mit der Kurbelwelle (10) durch eine Verbindungsstange (12) und mit der Stange (24, 24A, 24B) wirkverbunden ist und sich innerhalb von mindestens zwei gegenüberliegende Bahnen (18, 20) hin- und herbewegt, wobei der Kreuzkopf (14) ferner mit mindestens zwei gegenüberliegenden Gleitschuhen (40, 42) versehen ist, die derart angeordnet sind, dass sie jeweils auf die Bahnen (18, 20) weisen,
**dadurch gekennzeichnet, dass** einer (40) der Gleitschuhe mit einer Oberfläche ausgestattet ist, um Kontakt mit den Bahnen (18, 20) herzustellen, die eine unterschiedliche Form und/oder Größe der Ölverteilungsanordnung in Bezug auf die Kontaktfläche des gegenüberliegenden Gleitschuhs (42) aufweisen, wobei die Bahnen (18, 20) Schmieröl-Einlasslöcher (44, 46) aufweisen, um Schmieröl über alle Kontaktflächen abzudecken, die alle Räume zwischen den Bahnen (18, 20) und den Gleitschuhen (40, 42) füllen.

2. Kolbenverdichter nach Anspruch 1, **dadurch gekennzeichnet, dass** jede Kontaktfläche der gegenüberliegenden Gleitschuhe (40, 42) mit einer oder mehreren Oberflächennuten (48, 50) versehen ist, die zum Verteilen eines Schmierfluids zwischen den gegenüberliegenden Gleitschuhen (40, 42) und den Bahnen (18, 20) geeignet sind.

3. Kolbenverdichter nach Anspruch 2, **dadurch gekennzeichnet, dass** jeder der gegenüberliegenden Gleitschuhe (40, 42) eine Kontaktfläche aufweist, die zueinander unterschiedliche Bereiche aufweist, mit einer gleichen Anzahl von jeweiligen Oberflächennuten (48, 50) und die gleiche Anordnung entlang der Kontaktfläche jedes der gegenüberliegenden Gleitschuhe (40, 42) hat.

4. Kolbenverdichter nach Anspruch 2, **dadurch gekennzeichnet, dass** die gegenüberliegenden Gleitschuhe (40, 42) jeweils eine Kontaktfläche mit dem gleichen Flächeninhalt, mit einer gleichen Anzahl von jeweiligen Oberflächennuten (48, 50) und eine unterschiedliche Anordnung entlang der Kontaktfläche jedes der gegenüberliegenden Gleitschuhe (40, 42) aufweisen.

5. Kolbenverdichter nach Anspruch 2, **dadurch gekennzeichnet, dass** die gegenüberliegenden Gleitschuhe (40, 42) jeweils eine Kontaktfläche mit dem gleichen Bereich, mit einer verschiedenen Anzahl von jeweiligen Oberflächennuten (48, 50) entlang der Kontaktfläche jedes der gegenüberliegenden Gleitschuhe (40, 42) aufweisen.

6. Kolbenverdichter nach einem der vorstehenden Ansprüche, der mit mindestens einem doppeltwirkenden Zylinder (26) versehen ist.

7. Kolbenverdichter nach einem der vorstehenden Ansprüche, der mit mindestens zwei Zylindern (26A, 26B) vom einfach wirkenden Typ versehen ist, die einander gegenüberliegen.

## Revendications

1. Compresseur alternatif comprenant un mécanisme de vilebrequin, ledit mécanisme de vilebrequin étant du type apte à être relié de façon fixe à une tige (24, 24A, 24B) d'un piston (22, 22A, 22B) du compresseur et à un arbre de vilebrequin (10), ledit mécanisme de vilebrequin comprenant au moins une crosse (14) agencée de manière à être reliée fonctionnellement audit arbre de vilebrequin (10) au travers d'une bielle (12) et à ladite tige (24, 24A, 24B) et à aller et venir à l'intérieur d'au moins deux rails opposés (18, 20), ladite crosse (14) étant pourvue en outre d'au moins deux patins opposés (40, 42) agencés de manière à faire face respectivement auxdits rails (18, 20), **caractérisé en ce que** l'un (40) desdits patins est équipé d'une surface destinée à faire contact avec lesdits rails (18, 20) et ayant une forme et/ou une dimension d'agencement de distribution d'huile différentes de celles de la surface de contact du patin opposé (42), dans lequel les rails (18, 20) possèdent des trous d'admission d'huile lubrifiante (44, 46) permettant de recouvrir d'huile toutes les surfaces de contact en remplissant tous les espaces entre les rails (18, 20) et les patins (40, 42).

2. Compresseur alternatif selon la revendication 1, **caractérisé en ce que** chaque surface de contact desdits patins opposés (40, 42) est pourvue d'une ou plusieurs rainures de surface (48, 50) aptes à distribuer un liquide lubrifiant entre lesdits patins opposés (40, 42) et lesdits rails (18, 20).

3. Compresseur alternatif selon la revendication 2, **caractérisé en ce que** chacun desdits patins opposés (40, 42) possède une surface de contact qui présente des aires différentes les unes des autres, avec un nombre égal de rainures de surface respectives (48, 50) et présentant le même agencement le long de la surface de contact de chacun desdits patins opposés (40, 42).

4. Compresseur alternatif selon la revendication 2, **caractérisé en ce que** lesdits patins opposés (40, 42) possèdent chacun une surface de contact avec la même aire, avec un nombre égal de rainures de surface respectives (48, 50) et présentant un agencement différent le long de la surface de contact de chacun desdits patins opposés (40, 42).

5. Compresseur alternatif selon la revendication 2, **caractérisé en ce que** lesdits patins opposés (40, 42) possèdent chacun une surface de contact avec la même aire, avec un nombre différent de rainures de surface respectives (48, 50) le long de la surface de contact de chacun desdits patins opposés (40, 42).

6. Compresseur alternatif selon l'une quelconque des revendications précédentes, pourvu d'au moins un cylindre du type à double effet (26).

7. Compresseur alternatif selon l'une quelconque des revendications précédentes, pourvu d'au moins deux cylindres du type à simple effet (26A, 26B), opposés l'un à l'autre.
